# EUROPEAN PATENT APPLICATION

(11) **EP 3 868 497 A1**
(43) Date of publication of application: **25.08.2021**
(21) Application number: 21158371.1
(22) Date of filing: 22.02.2021
(51) Int. Cl.: B22F 5/10, B22F 10/20, B22F 10/28, B22F 10/40, B22F 10/43, B22F 10/47, B22F 12/00, B23P 15/26, B29C 64/40, B33Y 10/00, B33Y 80/00

(54) **HEAT EXCHANGERS AND MANUFACTURING METHODS THEREFOR**

(30) Priority: 21.02.2020 US 202016798004
(71) Applicant: Hamilton Sundstrand Corporation, Charlotte, NC 28217-4578 (US)
(72) Inventor: SYPEK, John, Chicopee, MA Massachusetts 01013 (US); SOLOMON, Andrew W., Windsor, CT Connecticut 06095 (US); OCKEN, Thomas J., Des Moines, IA Iowa 50310 (US)
(74) Representative: Dehns

(57) **Abstract**

A method can include additively manufacturing a heat exchanger core (201, 301) having one or more fluid channels (203, 303) using a first additive manufacturing process and a first material. The method can also include additively manufacturing a support structure (405) around the heat exchanger core using a second additive manufacturing process different from the first additive manufacturing process and a second material different from the first material after additively manufacturing the heat exchanger core.

## Description

### FIELD

This disclosure relates to heat exchangers.

### BACKGROUND

During the design, manufacturing, and production process many requirements are taken into consideration for heat exchangers. Material requirements and selection are chosen for a large variety of factors such as temperature, strength, corrosion, thermal conductivity, or weight requirements. Additive manufacturing opens up a large field for various geometries, materials, and other advantages in the heat exchanger industry. However, heat exchangers are currently built using only one material which has limitations.

Such conventional methods and systems have generally been considered satisfactory for their intended purpose. However, there is still a need in the art for improved heat exchangers and manufacturing methods therefor. The present disclosure provides a solution for this need.

### SUMMARY

A method is provided that includes additively manufacturing a heat exchanger core having one or more fluid channels using a first additive manufacturing process and a first material. The method further includes additively manufacturing a support structure around the heat exchanger core using a second additive manufacturing process different from the first additive manufacturing process and a second material different from the first material after additively manufacturing the heat exchanger core.

The first additive manufacturing process can be or include a laser powder bed fusion (LPBF) process. The second additive manufacturing process can be or include a directed energy deposition (DED) process. The DED process can be a multi-axis DED process, for example. Additively manufacturing the support structure can include attaching the support structure to the heat exchanger core at one or more material interaction regions.

In certain embodiments, additively manufacturing the support structure can include additively manufacturing the support structure to include a solid shell at least partially encasing the heat exchanger core. In certain embodiments, additively manufacturing the support structure can include additively manufacturing the support structure to include a cage having one or more structural openings defined by the cage.

In accordance with at least one aspect of this disclosure, a heat exchanger includes a heat exchanger core made of a first material and formed from a first additive manufacturing process. The heat exchanger core has one or more fluid channels. The heat exchanger includes a support structure made of a second material different from the first material and disposed around the heat exchanger core. The support structure is formed from a second additive manufacturing process different from the first additive manufacturing process.

The first additive manufacturing process can be or include any suitable process disclosed herein, e.g., as described above. The second additive manufacturing process can be or include any suitable process disclosed herein, e.g., as described above. The support structure can be attached (e.g., welded) to the heat exchanger core at one or more material interaction regions.

In certain embodiments, the support structure can be a solid shell at least partially encasing the heat exchanger core. The solid shell can form at least one fluid opening in fluid communication with at least one of the one or more fluid channels of the heat exchanger core, for example.

In certain embodiments, the support structure can include a cage having one or more structural openings defined by the cage. Any other suitable shape is contemplated herein.

The one or more material interaction regions can include an interface between an inner surface of the support structure and one or more standoffs extending from the one or more fluid channels of the heat exchanger core. In certain embodiments, the material interaction regions can include one or more material gradients blending the material of the heat exchanger core and the support structure.

The first material can be selected for heat transfer and/or can include a higher thermal conductivity than the second material. The second material can be selected for structural integrity and/or can be stronger and/or lighter than the first material. Any other suitable relative or absolute material properties for each of the first material and second material are contemplated herein.

In accordance with another aspect of this disclosure, a vehicle system includes a heat exchanger as disclosed herein, e.g., as described above. The heat exchanger has the support structure attached to the heat exchanger core at one or more material interaction regions and the material interaction regions can include one or more material gradients blending the material of the heat exchanger core and the support structure. Any suitable aircraft system (e.g., avionics cooling systems) and/or any other suitable application is contemplated herein.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a flow diagram of an embodiments of a method in accordance with this disclosure;
Fig. 2 is a schematic diagram of an embodiment of a first additive manufacturing process, showing laser powder bed fusion;
Fig. 3A is a perspective view of an embodiment of a heat exchanger core in accordance with this disclosure;
Fig. 3B is a cross-sectional view of an embodiment of a heat exchanger core in accordance with this disclosure;
Fig. 4 is a schematic diagram of an embodiment of a second additive manufacturing process applied around a heat exchanger core, showing directed energy deposition;
Fig. 5 is a schematic diagram of an embodiment of a heat exchanger in accordance with this disclosure;
Fig. 6A is a schematic cross-sectional view of a portion of an embodiment heat exchanger in accordance with this disclosure;
Fig. 6B is a transverse cross-sectional view of a portion of the embodiment of Fig. 6A; and
Fig. 7 is a perspective view of an embodiment of a heat exchanger in accordance with this disclosure, showing an embodiment of a cage support structure.

### DETAILED DESCRIPTION

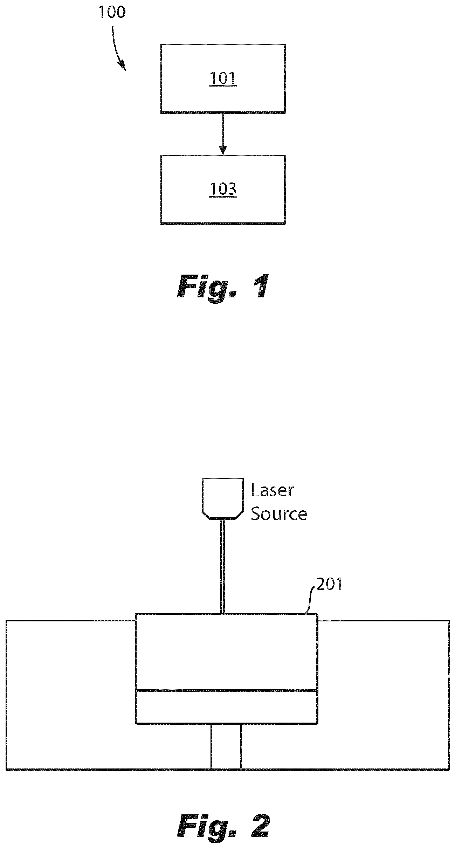

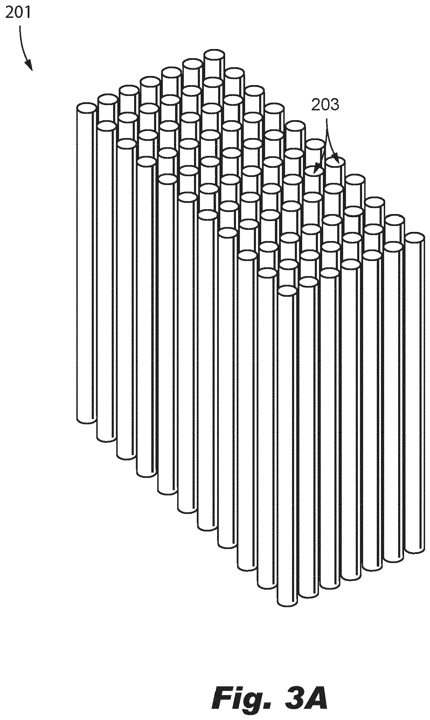

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2-7.

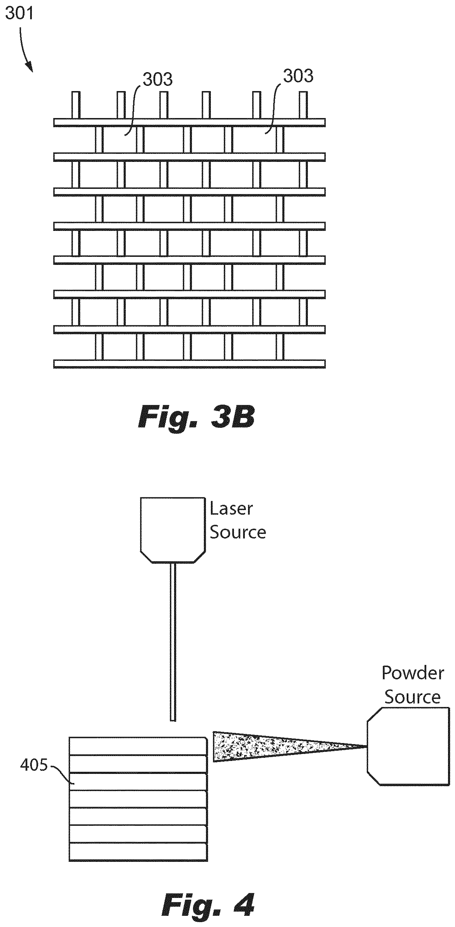

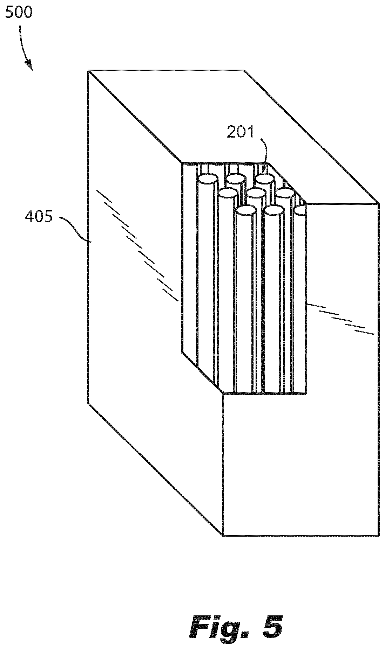

Referring to Figs. 1, 2, 3A, and 3B, a method 100 can include additively manufacturing (e.g., at block 101) a heat exchanger core 201, 301 having one or more fluid channels 203, 303 using a first additive manufacturing process and a first material. Referring to Figs. 4 and 5, the method 100 can also include additively manufacturing (e.g., at block 103) a support structure 405 around the heat exchanger core 201, 301 using a second additive manufacturing process different from the first additive manufacturing process and a second material different from the first material after additively manufacturing the heat exchanger core 201, 301.

As shown in Fig. 2, the first additive manufacturing process can be or include a laser powder bed fusion (LPBF) process. As shown in Fig. 4, the second additive manufacturing process can be or include a directed energy deposition (DED) process. The DED process can be a multi-axis (e.g., 5-axis) DED process, for example. Additively manufacturing the support structure 405 can include attaching the support structure 405 to the heat exchanger core 201, 301 at one or more material interaction regions (e.g., places where the heat exchanger core 201, 301 and the support structure 405 contact.

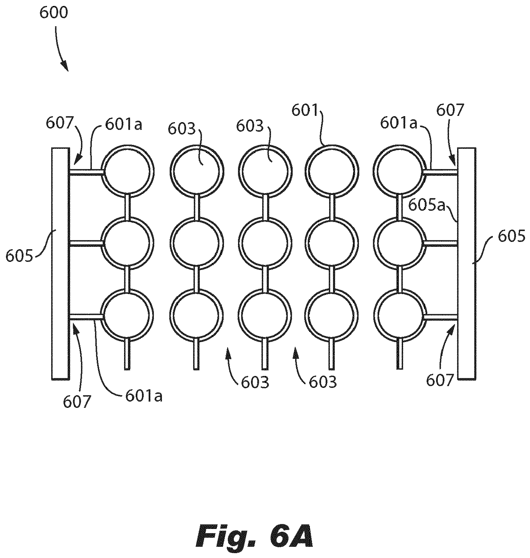

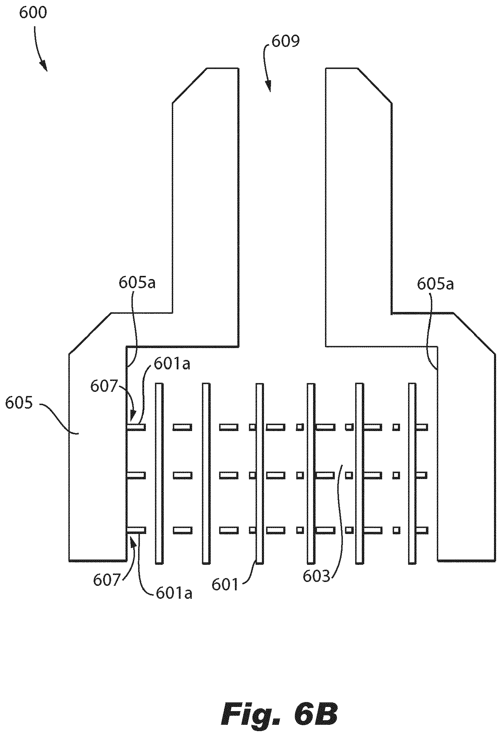

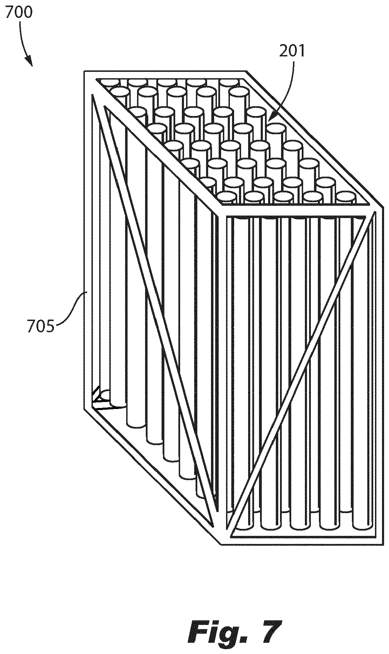

As shown in Figs. 5, 6A, and 6B, in certain embodiments, additively manufacturing the support structure 405, 605 of a heat exchanger 500, 600 can include additively manufacturing the support structure 405, 605 to include a solid shell at least partially encasing the heat exchanger core 201, 301, 601. Referring additionally to Fig. 7, in certain embodiments, additively manufacturing the support structure 705 of a heat exchanger 700 can include additively manufacturing the support structure 705 to include a cage. The cage can include a support structure with one or more structural openings (e.g., a bar assembly with diagonal linkages as shown in Fig. 7). Any other suitable type of support structure is contemplated herein. The method 100 can include any other suitable method(s) and/or portion(s) thereof.

In accordance with at least one aspect of this disclosure, referring, for example, to the embodiment of Figs. 5, 6A-6B, and 7, a heat exchanger 500, 600, 700 can include a heat exchanger core 201, 301, 601 made of (e.g., at least partially, mostly, or entirely) a first material and formed from a first additive manufacturing process. The heat exchanger core 201, 301, 601 can have one or more fluid channels 203, 303, 603, for example. The heat exchanger 500, 600, 700 can include a support structure 405, 605, 705 made of (e.g., at least partially, mostly, or entirely) a second material different from the first material and disposed around the heat exchanger core 201, 301, 601. The support structure 405, 605, 705 can be formed from a second additive manufacturing process different from the first additive manufacturing process.

The first and second additive manufacturing processes can be or include any suitable process disclosed herein, e.g., as described above. The support structure 405, 605 can be attached (e.g., welded) to the heat exchanger core 201, 601 at one or more material interaction regions, e.g., regions 607 shown in Figs. 6A and 6B.

In certain embodiments, as shown in Figs. 5-6B, the support structure 405, 605 can be a solid shell at least partially encasing the heat exchanger core 201, 601. As shown in Fig. 6B, the solid shell support structure 605 can form at least one fluid opening 609 in fluid communication with at least one of the one or more fluid channels 603 of the heat exchanger core 601, for example. As shown in Figs. 6A and 6B, the one or more material interaction regions 607 can include an interface between an inner surface 605a of the support structure 605 and one or more standoffs 601a extending from the one or more fluid channels 603 of the heat exchanger core 601.

In certain embodiments, the material interaction regions 607 can include one or more material gradients blending the material of the heat exchanger core 601 and the support structure 605. The material gradients can be formed during one or more of the first additive manufacturing process and/or the second additive manufacturing process. For example, during LPBF, the core 601 can be made to include the material gradient such that the core 601 transitions to the second material from the first material at the one or more material interaction regions 607, and the the support structure 605 can be then manufactured around the core using the second material and/or the second material blended with the first material (e.g., at the material interaction regions 607). In certain embodiments, each additive manufacturing process can form a portion of the gradient (e.g., equal sizes).

In certain embodiments, the gradient can be formed solely by the DED process which can allow spot variable material properties instead of layer dependent material properties of traditional LPBF, for example. In certain embodiments, the support structure 605 may include the gradient entirely, e.g., at each material interaction portion. Any suitable gradient, location, and distribution between the core and the support structure is contemplated herein.

As shown in Fig. 7, in certain embodiments, the support structure 705 can include a cage (e.g., a structure of connecting bars as shown, or any other suitable type of cage structure). A cage can be used to minimize weight while maximizing strength of the support structure 705, for example. Any other suitable shape and/or type of support structure is contemplated herein.

In certain embodiments, the first material can be selected for heat transfer and/or can include a higher thermal conductivity than the second material. The second material can be selected for structural integrity and/or can be stronger and/or lighter than the first material. Any other suitable relative or absolute material properties for each of the first material and second material are contemplated herein. For example, in certain embodiments, the first material can be or include one or more first metals and/or alloys (e.g., nickel, aluminum, copper, etc.) and the second material can be or include one or more second metals and/or alloys (e.g., titanium, nickel, steel, etc.). For example, a material gradient as disclosed above can include a linear transition from a core of nickel alloy to a support structure of titanium such that, at a middle point in the gradient, there is a half mixture of the first material and the second material. Any other suitable type of gradient (e.g., non-linear) and/or materials are contemplated herein.

In accordance with at least one aspect of this disclosure, a vehicle system (e.g., a fuel system, a cooling system, etc.) can include a heat exchanger as disclosed herein, e.g., heat exchanger 500, 600, 700 as described above. For example, the heat exchanger can have the support structure attached to the heat exchanger core at one or more material interaction regions and the material interaction regions can include one or more material gradients blending the material of the heat exchanger core and the support structure. Any suitable vehicle system (e.g., avionics cooling systems) and/or any other suitable application is contemplated herein.

Embodiments can include a heat exchanger core made using additive technology including, but not limited to, L-PBF or binder jet. The core may be printed in one metal using one or more such methods to generate a core geometry including but not limited to tubes, plate with pins/fins, or a weave, or any other suitable shape. The core can be constructed of various metals for optimum characteristics including but not limited to thermal conductivity, heat transfer, corrosion resistance, weight reduction, ductility, fire protection, etc. The core can be surrounded using an alternative method, e.g., Direct Energy Deposition (DED). A full shell or an optimized cage can be welded to the core body, for example. This can be used for structural integrity of the heat exchanger. Embodiments having a full shell can be used for, but not limited to, maximum structural support, corrosion resistance to external environments, temperature, for example. Embodiments having a cage can be optimized for weight and strength, for example.

Using multiple materials during the additive process can provide a more competitive solution then current additive processes. Additive manufacturing can be used to build a heat exchanger that utilizes multiple materials for optimization of different performance aspects based on different regions and requirements within the heat exchanger. Different materials can be used for the internal core to optimize aspects such as heat transfer, thermal conductivity, etc. Other materials can be used for more structural and external components of the heat exchanger that focus on properties such as strength, corrosion, vibrations, etc. Embodiments can be used for, but are not limited to heat exchangers.

Embodiments can optimize heat exchanger performance by integrating various materials into one heat exchanger design. Materials can be chosen to and applied to critical areas for optimum property needs such as thermal conductivity, thermal expansion, heat transfer, strength, thermal fatigue, and corrosion. Any suitable materials appreciated by those having ordinary skill in the art for a desired property (e.g., properties as disclosed above) are contemplated herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A method, comprising:
additively manufacturing a heat exchanger core (201, 301) having one or more fluid channels (203, 303) using a first additive manufacturing process and a first material; and
additively manufacturing a support structure (405) around the heat exchanger core using a second additive manufacturing process different from the first additive manufacturing process and a second material different from the first material after additively manufacturing the heat exchanger core.

2. The method of claim 1, wherein the first additive manufacturing process is or includes a laser powder bed fusion, LPBF, process.

3. The method of claim 2, wherein the second additive manufacturing process is or includes a directed energy deposition, DED, process, and optionally wherein the DED process is a multi-axis DED process.

4. The method of any preceding claim, wherein additively manufacturing the support structure includes attaching the support structure to the heat exchanger core at one or more material interaction regions.

5. The method of claim 4, wherein the support structure includes a solid shell at least partially encasing the heat exchanger core, and optionally wherein the support structure includes a cage.

6. A heat exchanger, comprising:
a heat exchanger core (201, 301) made of a first material and formed from a first additive manufacturing process, the heat exchanger core comprising one or more fluid channels (203k 303); and
a support structure (405) made of a second material different from the first material and disposed around the heat exchanger core, the support structure formed from a second additive manufacturing process different from the first additive manufacturing process.

7. The heat exchanger of claim 6, wherein the first additive manufacturing process is or includes a laser powder bed fusion, LPBF, process.

8. The heat exchanger of claim 7, wherein the second additive manufacturing process is or includes a directed energy deposition, DED, process, and optionally wherein the DED process is a multi-axis DED process.

9. The heat exchanger of claim 8, wherein the support structure is attached to the heat exchanger core at one or more material interaction regions.

10. The heat exchanger of claim 9, wherein the support structure includes a solid shell at least partially encasing the heat exchanger core, and optionally wherein the support structure includes a cage having one or more structural openings defined by the cage.

11. The heat exchanger of claim 10, wherein the solid shell forms at least one fluid opening in fluid communication with at least one of the one or more fluid channels of the heat exchanger core.

12. The heat exchanger of claim 9, wherein the one or more material interaction regions includes an interface between an inner surface of the support structure and one or more standoffs extending from the one or more fluid channels of the heat exchanger core, and optionally wherein the material interaction regions includes one or more material gradients blending the material of the heat exchanger core and the support structure.

13. The heat exchanger of claims 6 to 12, wherein the first material is selected for heat transfer and/or includes a higher thermal conductivity than the second material.

14. The heat exchanger of claim 13, wherein the second material is selected for structural integrity and/or is stronger and/or lighter than the first material.

15. A vehicle system, comprising:
a heat exchanger, having:
a heat exchanger as claimed in any of claims 6 to 14, wherein the support structure is attached to the heat exchanger core at one or more material interaction regions, wherein the material interaction regions includes one or more material gradients blending the material of the heat exchanger core and the support structure.
